# FASCICULE DE BREVET EUROPEEN

(11) **EP 2 647 229 B1**
(45) Date de publication et mention de la délivrance du brevet: **08.08.2018**
(21) Numéro de dépôt: 11804720.8
(22) Date de dépôt: 01.12.2011
(51) Int. Cl.: H04W 4/14, G06Q 30/00, H04W 12/00, H04M 1/725

(54) **INTERFACE D'ACCÈS À UN SERVICE BASÉ SUR DES CODES DE DONNÉES PEU STRUCTURÉES**
SCHNITTSTELLE FÜR DEN ZUGRIFF AUF EINEN DIENST BASIEREND AUF LOSE STRUKTURIERTEN DATENCODES
INTERFACE FOR ACCESSING A SERVICE BASED ON LOOSELY STRUCTURED DATA CODES

(30) Priorité: 03.12.2010 FR 1060077
(43) Date de publication de la demande: 09.10.2013
(73) Titulaire: Orange, 75015 Paris (FR)
(72) Inventeur: SCHWARTZMANN, Jean-Jacques, F-14760 Bretteville Sur Odon (FR); MAZINGUE, Didier, F-14220 Caumont Sur Orne (FR); BOUTROUX, Anne, F-14880 Hermanville Sur Mer (FR)
(86) Numéro de dépôt international: PCT/FR2011/052841
(87) Numéro de publication internationale: WO 2012/072958

(56) Documents cités:
- EP-A1- 2 134 115
- WO-A2-2005/067372
- WO-A2-2009/135175
- US-A1- 2006 189 278
- DEC_XM: "USSD Menu Browser", INTERNET CITATION, août 2007 (2007-08), pages 1-3, XP002575162, Extrait de l'Internet: URL:http://www.rentacoder.com/RentACoder/m isc/BidRequests/ShowBidRequest. asp?lngBidRequestId=738186 [extrait le 2010-03-25]
- ANONYMOUS: "USSD Services for Interactive Mobile Users - Building User-Friendly Mobile Telephony Applications Using Dialogic TM Distributed Signaling Interface Components", INTERNET CITATION, 31 août 2008 (2008-08-31), pages 1-17, XP002528245, Extrait de l'Internet: URL:http://www.dialogic.com/products/docs/ appnotes/11038_USSD_an.pdf [extrait le 2008-05-11]

## Description

L'invention concerne le domaine des services de téléphonie mobile basés sur des codes de données peu structurées, appelés codes USSD (de l'anglais « Unstructured Supplementary Service Data »).

Le canal USSD est une fonctionnalité de base du standard GSM (pour « Global System for Mobile communications ») ; il permet de véhiculer des informations au-dessus des canaux de signalisation du réseau GSM. Le canal USSD ne nécessite qu'un accès GSM de base et les services qui empruntent ce canal sont accessibles à partir de n'importe quel terminal mobile, sans adjonction de code spécifique sur le terminal. L'avantage de ce canal est d'être toujours disponible et très réactif. Il est également accessible depuis des réseaux de type GPRS ou UMTS.

Un exemple de service USSD connu, offert par plusieurs opérateurs de téléphonie mobile, est le « #123# » qui permet d'accéder au suivi de sa consommation, sur compte prépayé ou non. Lorsqu'un utilisateur saisit et envoie sur le réseau le code #123# depuis son téléphone mobile, les informations requises s'affichent en retour sur son écran.

Des services évolués de paiement mobile qui utilisent les codes USSD ont été développés. On peut citer par exemple le service « Orange Money », offert par France Télécom Orange. Ce service a été déployé dans quelques pays émergents et permet à des populations non bancarisées d'effectuer des opérations financières au moyen de leur terminal mobile. Des utilisateurs de terminaux mobiles qui souscrivent à ce service se voient attribuer un compte associé, sur lequel ils peuvent effectuer différentes opérations. Ainsi, le service offre différentes options de services, accessibles à partir du terminal mobile, telles que par exemple la consultation du compte, le rechargement du compte, le paiement de factures, le transfert d'argent depuis un premier compte vers un deuxième compte.

Aucune interface d'accès à ce service n'est installée sur le terminal mobile en tant que programme logiciel associé au service. En effet, l'interface est offerte par le réseau, via le canal USSD. L'accès au service est déclenché par envoi d'un code USSD sur le réseau, par exemple « *#140# ». Cet envoi génère l'ouverture d'une session USSD interactive associée à l'exécution du service ou d'une option particulière du service, et l'envoi sur le terminal mobile d'un menu dit menu USSD. Le menu est un message textuel affiché sur l'écran du terminal invitant l'utilisateur à saisir un choix, ou à fournir une information, par exemple un code d'identification, ou code «PIN» (de l'anglais «Personal Identification Number »). Par exemple, un premier menu propose plusieurs options pour le service, parmi lesquelles une première option pour effectuer un transfert d'argent compte à compte. Un autre menu invite l'utilisateur à saisir un code d'identification personnel, ou un montant associé à un transfert en cours. L'utilisateur doit sélectionner un élément parmi plusieurs éléments ou saisir une information, puis valider la sélection de cet élément ou la saisie de cette information, puis l'envoyer sur le réseau. La validation et l'envoi d'un choix ou des informations saisies par l'utilisateur provoquent l'envoi de l'élément sélectionné ou de l'information sur le réseau au cours de la même session USSD. Une succession de menus USSD est ainsi affichée sur le terminal utilisateur au cours de la session USSD courante correspondant à l'exécution du service ou d'une option particulière du service, et une succession d'informations est envoyée sur le réseau par l'utilisateur au cours de la session en réponse à ces menus. En variante, l'utilisateur peut saisir et envoyer un unique code USSD enrichi des informations de l'utilisateur (par exemple «* #140#1#06xxxxxxxx#200#1234# »), correspondant à l'envoi sur le réseau en une fois de toutes les informations nécessaires à l'enchaînement de toutes les étapes du service ou d'une option particulière du service. Dans ce cas bien sûr, aucun menu n'est affiché sur le terminal utilisateur, le code USSD enrichi comprenant une concaténation du code de déclenchement du service, de l'option du service choisie, et de l'ensemble des informations nécessaires à l'exécution du service. Ainsi, on l'a compris, l'interface d'accès au service est assez rudimentaire et de navigation relativement malaisée. Dans un premier cas, correspondant à une session USSD interactive, en réponse à un menu USSD affiché sur l'écran du terminal, l'utilisateur doit saisir son choix, le valider et l'envoyer sur le réseau. Ici, l'utilisation de l'interface est assez fastidieuse.

Dans un deuxième cas, correspondant à un code USSD enrichi d'informations saisies par l'utilisateur, l'utilisateur doit avoir mémorisé le code et l'ordre dans lequel les informations doivent être renseignées, le code enrichi étant composé de caractères alphanumériques, de caractères '#' et '*'. Ici, l'interface est réduite à sa plus simple expression, ce qui est acceptable lorsque le service est simple mais devient rapidement peu utilisable lorsque le service se complique.

Le document WO 2009/135175 A2 décrit comment améliorer l'interaction lors de l'usage de services USSD, notamment au moyen de l'affichage de menus interactifs. Il anticipe notamment des "handset pulled" services USSD initiés par le terminal mobile après avoir capturé le choix d'un service par l'utilisateur. L'invention vient améliorer la situation en proposant un procédé d'accès à un service basé sur la norme USSD d'un réseau de télécommunications mobiles depuis un terminal mobile, ledit procédé comprenant les phases suivantes, mises en oeuvre par le terminal mobile:
- une première phase exécutée localement par le terminal, comprenant les étapes suivantes :
   - affichage d'au moins une option de service sur une interface dudit terminal, ladite option de service étant associée à un code USSD, qui comprend une indication du service et de l'option de service,
   - sélection par un utilisateur de ladite option de service,
   - saisie par l'utilisateur d'au moins une information complémentaire demandée pour configurer l'option de service,
   - construction d'un code USSD enrichi à partir du code USSD de l'option de service sélectionnée et de l'information complémentaire saisie, par concaténation,
- une deuxième phase de communication du terminal à travers le réseau, lors de laquelle le terminal envoie le code USSD enrichi construit à travers un canal dédié du réseau.

Ainsi, l'invention permet de faciliter l'accès des utilisateurs à tout type de service actuellement proposé sur la base de codes USSD. On remarque que les services basés sur des codes USSD ne nécessitent qu'un accès de base au réseau et que tout type de téléphone est adapté pour accéder au réseau via un canal USSD. Ainsi, de tels services peuvent être accédés par une majorité de personnes, à travers un accès au réseau rudimentaire. Ainsi, l'USSD continue à être utilisé tout en masquant complètement la cinématique et l'utilisation de ces codes aux utilisateurs.

L'invention rend les services à base de codes USSD accessibles à tous. Notamment, l'invention rend convivial l'accès à des services dans des pays où l'illettrisme est important. Cet aspect est particulièrement intéressant dans des pays émergents, où un pourcentage non négligeable de la population maîtrise mal, voire pas du tout la lecture.

Avec une telle interface d'accès, il devient possible de proposer des services évolués sur mobile à ces populations. Cet aspect est intéressant pour des pays où le réseau mobile prédomine, à défaut d'une infrastructure de réseau fixe sur l'ensemble du pays.

Par ailleurs, la mise en oeuvre de l'invention ne nécessite aucune modification de l'architecture réseau. En particulier, ni la passerelle USSD, ni la plate-forme de service ne sont impactées par l'invention.

Dans un mode de réalisation de l'invention, l'étape d'affichage d'au moins une option de service comprend un affichage d'au moins un pictogramme représentant ladite option de service et la sélection par un utilisateur de ladite option de service consiste à sélectionner ledit pictogramme.

L'utilisation d'éléments graphiques au niveau de l'interface facilite l'utilisation du service.

Dans un variante de réalisation, un message vocal est restitué de façon concomitante à l'affichage d'au moins un élément sur l'interface du terminal.

Les éléments associés aux options de service qui sont affichés sur l'interface utilisateur sont associés à des messages vocaux indiquant la signification de l'élément. Ainsi, l'interface facilite également l'accès à des services à des personnes déficientes visuellement. Encore une fois, cet aspect est important pour des pays émergents où un pourcentage non négligeable de la population n'a pas facilement accès à des soins permettant de pallier d'éventuels problèmes visuels.

De façon avantageuse, l'information saisie par l'utilisateur est chiffrée, ou signée, préalablement à l'envoi sur le canal dédié du réseau du code enrichi.

Ainsi, l'invention permet de garantir la confidentialité et/ou l'intégrité d'informations saisies par l'utilisateur lors de leur transmission sur le réseau, ce qui n'est pas possible avec l'interface USSD classique. Il devient alors possible de chiffrer un code PIN qui est alors transmis chiffré sur le réseau, garantissant la confidentialité de ce code lors de sa transmission dans le réseau. La plate-forme du réseau en charge du traitement de l'information est bien sûr adaptée pour déchiffrer l'information reçue chiffrée et l'utiliser dans le cadre de l'exécution du service. Il est également possible de signer des informations afin de garantir leur intégrité.

L'invention concerne également un terminal mobile comprenant :
- des moyens d'affichage, adaptés pour afficher au moins une option de service, ladite option de service étant associée à un code USSD qui comprend une indication du service et de l'option de service,
- des moyens de sélection et de saisie, adaptés pour sélectionner ladite option de service, et pour saisir au moins une information complémentaire demandée pour configurer ladite option de service,
- des moyens de construction, agencés pour construire un code USSD enrichi à partir du code USSD de l'option de service sélectionnée et de l'information complémentaires saisie, par concaténation,
- des moyens d'envoi, agencés pour envoyer le code USSD enrichi construit à travers un canal dédié du réseau.

C'est le terminal utilisateur qui est adapté pour offrir une interface conviviale aux services basés sur les codes USSD.

L'invention porte également sur un programme sur un support de données et chargeable dans la mémoire interne d'un terminal mobile, le programme comprenant des portions de code pour l'exécution des étapes du procédé selon l'invention, lorsque le programme est exécuté sur ledit terminal.

L'invention concerne aussi un support de données partiellement ou totalement amovible, comportant des instructions de code de programme pour l'exécution des étapes d'un procédé selon l'invention.

De nombreux détails et avantages de l'invention seront mieux compris à la lecture de la description d'un mode particulier de réalisation en référence aux schémas annexés donnés à titre non limitatif et dans lesquels :
- la figure 1 illustre les étapes du procédé d'accès à un service basé sur des codes USSD, selon un premier mode particulier de réalisation de l'invention ;
- la figure 2 représente un exemple de réalisation d'un terminal mobile apte à mettre en oeuvre le procédé de la figure 1.

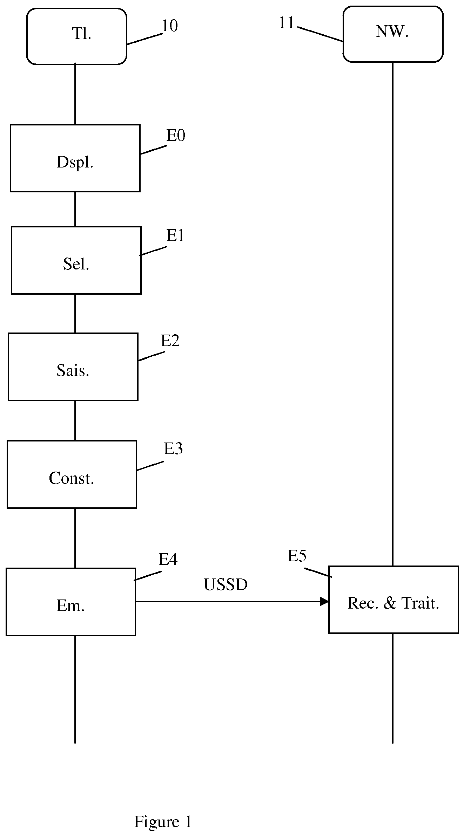

Les étapes d'un procédé d'accès à un service basé sur des codes « USSD » (de l'anglais « Unstructured Supplementary Service Data »), selon un exemple de réalisation vont maintenant être décrites en relation avec la figure 1.

Un utilisateur (non représenté) est abonné à un service offert par un opérateur d'un réseau mobile 11. Pour accéder à ce service, l'utilisateur dispose d'un terminal mobile 10 équipé de moyens IHM d'Interface Homme Machine, tels qu'un écran et un clavier. Le clavier comprend de manière classique des touches de navigation permettant de faire défiler un menu affiché sur l'écran, et une touche de validation permettant de valider la sélection d'un élément affiché sur l'écran, par exemple l'élément sélectionné apparaît surligné sur l'écran.

Le réseau 11 est par exemple le réseau «GSM» (de l'anglais «Global System for Mobile telecommunications »). Plus précisément, le réseau 11 comprend un équipement (non représenté), appelé passerelle USSD, connecté à une plate-forme de service (non représentée) dédiée par exemple à un service particulier. Elle est apte à recevoir et à interpréter des codes USSD saisis depuis le terminal mobile 10, à envoyer au terminal mobile 10 des menus USSD et des messages « SMS » (pour « Short Message Service ») de confirmation. La passerelle est adaptée également pour dialoguer avec la plate-forme de service. Par exemple, la passerelle USSD est apte à mettre en forme un code USSD et des informations complémentaires reçues du terminal mobile et à les transmettre à la plate-forme de service. Elle est également adaptée pour recevoir de la plate-forme de service des informations à transmettre au terminal mobile 10, sous forme de menus USSD, ou de messages SMS de confirmation. La passerelle USSD est accessible par le terminal depuis un canal du réseau appelé canal USSD. Elle est connectée à la plate-forme de service par exemple au moyen d'une liaison dédiée.

L'invention est décrite ici dans le cadre d'un service de paiement sur mobile.

Dans une étape initiale d'affichage E0, il est affiché sur l'écran du terminal 10 un ensemble d'options de service de paiement sur mobile. Dans l'exemple particulier décrit ici, les options de service sont représentées par des pictogrammes respectifs. Cette étape E0 fait suite au choix par l'utilisateur de lancer le service depuis son terminal mobile. Le service de paiement sur mobile permet à des utilisateurs qui ont souscrit au service d'effectuer différentes opérations financières depuis leur terminal sur un compte associé à cette souscription. Le service, par exemple l'offre "Orange Money" proposée par France Télécom Orange, comprend différentes options accessibles depuis le terminal mobile, par exemple le transfert d'argent depuis un premier compte vers un deuxième compte, la consultation du compte, le rechargement du compte, le paiement de factures. Un pictogramme est associé à chacune de ces options. Le pictogramme représente l'option de service associée. A chacune de ces options correspond un code USSD, qui est donc associé également à un pictogramme.

Les codes USSD sont classiquement composés de caractères alphanumériques et des caractères spéciaux « # » et « * ». Plus précisément, un code USSD est de la forme : (%)(%)%XY%(*text)#, où % représente les caractères « # » ou « * », () une information optionnelle, XY au moins 1 chiffre, et text une chaîne de caractères alphanumériques. Typiquement le code USSD associé à une première option du service de paiement comprend une indication qu'il s'agit du service de paiement et une indication que l'option choisie est la première. Ici, le code USSD correspondant au pictogramme associé à l'option de transfert d'argent du service de paiement est « *#140#1# ».

Dans une étape de sélection E1, l'utilisateur sélectionne sur son terminal 10 une option du service en sélectionnant le pictogramme associé. La sélection est validée au moyen de la touche de validation du clavier du terminal. Par exemple, l'utilisateur sélectionne le pictogramme associé au transfert d'argent compte à compte. La validation de la sélection d'une option provoque l'affichage sur le terminal 10 d'un écran de saisie invitant l'utilisateur à saisir un code personnel d'identification, appelé habituellement code « PIN » (de l'anglais « Personal Identification Number »). L'option de service sélectionnée est associée en mémoire, dans le terminal, à un code USSD. Ainsi, pour le service de paiement qui illustre les étapes du procédé, la première option de transfert d'argent est associée au code USSD « *#140#1# », qui doit être enrichi du numéro de téléphone destinataire du transfert, du montant de la transaction et du code PIN, une deuxième option de demande de solde de compte est associée au code USSD « *#140#2# » qui doit être enrichi du code PIN, une troisième option de rechargement est associée au code « *#140#3# » qui doit être enrichi par un montant du rechargement et un code PIN.

Dans une étape de saisie E2, l'utilisateur saisit l'information requise, ici son code PIN, et valide cette saisie. Le code PIN est une information nécessaire pour configurer l'option choisie, en l'espèce le transfert d'argent. Le code PIN permet d'authentifier l'accès au compte associé au service de paiement.

D'autres informations de configuration peuvent être nécessaires à la configuration de l'option de service. Par exemple, pour l'option de transfert d'argent, l'utilisateur doit également indiquer le numéro de téléphone du destinataire du transfert d'argent, et le montant du transfert. Ainsi, selon la cinématique inhérente à l'option de service choisie, la validation de la saisie par l'utilisateur à l'étape E2 provoque l'affichage d'un nouvel écran de saisie. L'étape de saisie E2 peut alors être exécutée plusieurs fois, selon la cinématique associée à l'option de service choisie.

L'information de configuration saisie par l'utilisateur au cours de l'étape E2 est mémorisée dans une mémoire non représentée du terminal mobile 10.

Dans une étape de construction E3, consécutive à la saisie par l'utilisateur d'au moins une information de configuration au cours de l'étape E2, il est construit au niveau du terminal mobile 10 un code USSD enrichi à partir du code USSD associé à l'option de service choisie et de l'information de configuration saisie au cours de l'étape E2 de saisie. Par exemple, pour l'option de service transfert d'argent, la sélection de cette option qui est associée en mémoire au code USSD « *#140#1# » et la saisie des informations nécessaires réalisées au cours d'étapes de saisie successives E2 provoque à l'étape de construction E3, la construction du code USSD enrichi : *#140#1#EZABPQMCDU#200#xxxx#, où EZABPQMCDU représente le numéro de téléphone destinataire du transfert, 200 le montant du transfert et « xxxx » le code PIN.

Les étapes d'affichage E0, de sélection E1, de saisie E2 et de construction E3 sont exécutées localement sur le terminal 10 et constituent une première phase du procédé selon l'invention.

Cette première phase exécutée localement au niveau du terminal est suivie d'une deuxième de communication du terminal à travers le réseau mobile.

Ainsi, une fois le code USSD enrichi construit au cours de l'étape E3, ce code est envoyé par le terminal 10 à travers le réseau au cours d'une étape de communication E4. Plus précisément, le code USSD enrichi emprunte un canal dédié du réseau 11, le canal USSD. Cette étape de communication E4 correspond à la deuxième phase de communication dans le réseau.

Dans une étape suivante E5 de réception et de traitement, le code USSD est traité dans le réseau 11, de façon connue. D'éventuels messages de confirmation ou d'erreur spécifiques au service peuvent ensuite être envoyés par le réseau 11 au terminal 10.

Le service décrit ici est un service de paiement sur mobile et l'option décrite est celle du transfert d'argent compte à compte. Bien sûr l'invention n'est pas limitée à ce service et à cette option de service. Ainsi, il est possible d'offrir une telle interface d'accès pour tout service empruntant le canal USSD. On remarque que plus la cinématique du service est complexe ou nécessite la saisie d'un nombre important d'informations de configuration, et plus l'interface d'accès selon l'invention est avantageuse. En effet, l'invention permet de masquer à l'utilisateur la cinématique USSD du service, gérée par l'interface elle-même sur le terminal mobile 10. Elle offre ainsi une interface d'accès conviviale, basée sur des pictogrammes et des écrans de saisie simples, à tout service basée sur des codes USSD. Cet aspect est important pour des populations de pays émergents dont un pourcentage non négligeable ne maîtrise pas forcément la lecture.

Dans une variante de réalisation, les pictogrammes affichés sur l'écran du terminal 10 sont associés chacun à un message vocal. Ainsi, la sélection d'un pictogramme par l'utilisateur provoque l'envoi sur une interface audio du terminal 10 du message vocal associé, qui précise la signification du pictogramme. De même, lorsqu'un écran de saisie est affiché sur le terminal 10, un message audio est joué indiquant l'information que l'utilisateur doit saisir. Ainsi, l'interface est adaptée également à des personnes malvoyantes. Cette possibilité revêt une grande importance dans des pays émergents où le service est proposé puisque nombre de personnes à la vue défaillante n'accèdent pas forcément à des soins leur permettant de pallier cette malvoyance.

Il est habituel que la saisie d'un code PIN se fasse en remplaçant à l'écran, lors de la saisie, les caractères par des caractères de substitution, par exemple des caractères '*', afin de garantir la confidentialité du code PIN. Cela n'est cependant pas possible avec une interface USSD classique. Plus généralement, cela peut concerner la saisie de toute information confidentielle. Dans une variante de réalisation, l'invention permet également de transmettre ce type d'information confidentielle sur l'interface USSD sous forme chiffrée. Ainsi, une fois une information confidentielle saisie, par exemple un code PIN, elle est chiffrée sur le terminal 10 et transmise chiffrée dans le code USSD enrichi. Le chiffrement peut être obtenu au moyen de différents algorithmes de chiffrement connus, basés sur de la cryptographie à clés publiques, ou de la cryptographie symétrique. Par exemple, en chiffrement symétrique on peut utiliser un algorithme standard de type « DES » (de l'anglais « Data Encryption Standard »), ou « AES » (de l'anglais « Advanced Encryption Standard). En chiffrement asymétrique, on peut utiliser un algorithme de type « RSA » (du nom des inventeurs « Rivest, Shamir et Adleman »).

Dans une variante de réalisation de l'invention, un contrôle de l'authenticité de l'information de configuration saisie par l'utilisateur peut avantageusement être mis en oeuvre localement sur le terminal, avant que l'information ne soit transmise sur le canal USSD. Par exemple, dans le cas de l'option de transfert d'argent du service de paiement, le montant de la transaction peut avantageusement être signé pour éviter toute contestation d'un montant par un utilisateur destinataire du transfert, ou à l'origine du transfert. Dans un exemple de réalisation, une fonction de signature RSA peut être utilisée en signant au moyen d'une clé privée propre au terminal un condensé du montant de la transaction. Un tel condensé peut être obtenu au moyen d'une fonction de hachage, par exemple, SHA-1, SHA-256 (pour « Secure Hash Algorithm »), MD5 (pour « Message Digest »).

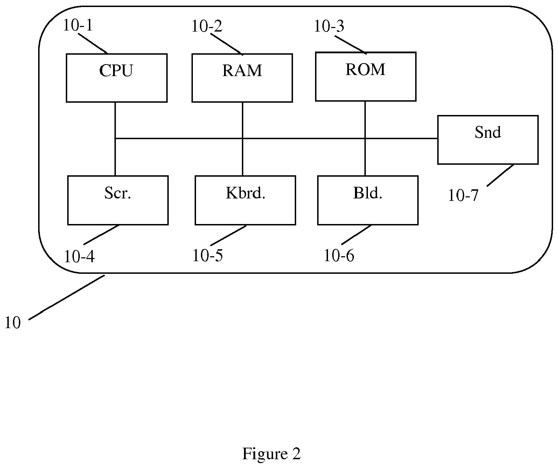

Un terminal mobile selon une forme particulière de réalisation va maintenant être décrit en relation avec la figure 2.

Le terminal mobile 10 est un terminal adapté pour utiliser le canal USSD. Typiquement, tout terminal mobile est compatible USSD.

Le terminal mobile 10 comprend plusieurs modules :
- une unité de traitement, ou « CPU » pour « Central Processing Unit » 10-1,
- un ensemble de mémoires, dont une mémoire volatile 10-2, utilisée pour exécuter des instructions de code, stocker des variables, etc., et une mémoire 10-3 de stockage de type ROM. La mémoire volatile 10-2 est ainsi adaptée pour mémoriser des choix et informations saisies par l'utilisateur. La mémoire de stockage 10-3 est adaptée pour stocker les codes USSD associés aux options de service. Dans un exemple de réalisation, la mémoire de stockage 10-3 comprend une zone sécurisée adaptée pour mémoriser des éléments cryptographiques tels qu'une clé secrète utilisée par exemple dans un algorithme de chiffrement symétrique pour chiffrer des informations saisies par l'utilisateur, ou une clé privée utilisée pour signer une information.
- un ensemble d'interfaces, comprenant :
   - un écran 10-4, adapté pour afficher des messages et des pictogrammes à l'attention de l'utilisateur. Les pictogrammes sont respectivement associés à une option de service. Chaque option de service correspond à un code USSD. L'écran 10-4 est adapté pour mettre en oeuvre l'étape d'affichage E0 du procédé selon l'invention,
   - un clavier 10-5, adapté pour permettre la saisie par l'utilisateur de choix et d'informations complémentaires et la sélection de pictogrammes. Le clavier 10-5 est adapté pour mettre en oeuvre les étapes de saisie E2 et de sélection E3 du procédé selon l'invention,
   - dans une variante de réalisation, le terminal comprend également un haut-parleur (non représenté), adapté pour émettre des messages vocaux associés à un pictogramme, ou à un menu affichés sur l'écran,
- des moyens de construction 10-6, agencés pour construire un code USSD enrichi à partir du code USSD du pictogramme sélectionné et de l'information complémentaire saisie, par concaténation. Les moyens de construction 10-6 coopèrent avec la mémoire volatile 10-2 où sont stockées temporairement les informations complémentaires saisies par l'utilisateur. Les moyens de construction 10-6 sont sous forme d'un module logiciel comprenant des instructions pour mettre en oeuvre l'étape de construction E3 du procédé selon l'invention.
- des moyens d'envoi 10-7, agencés pour envoyer le code USSD enrichi construit à travers un canal dédié du réseau. Les moyens d'envoi 10-7 coopèrent avec une antenne du terminal (non représentée) pour envoyer le code sur la voie radio. Les moyens d'envoi 10-7 sont agencés pour mettre en oeuvre la deuxième phase du procédé selon l'invention correspondant à l'envoi E4 sur le réseau du code USSD enrichi.

Les moyens d'envoi 10-7, de construction 10-6, les interfaces 10-4, 10-5 comprennent des modules logiciels comprenant des instructions logicielles pour faire exécuter les étapes du procédé d'accès à un service selon l'invention. Les modules logiciels peuvent être stockés dans ou transmis par un support de données. Celui-ci peut être un support matériel de stockage, par exemple un CD-ROM, une disquette magnétique ou un disque dur, ou bien un support de transmission, ou un réseau.

## Revendications

1. Procédé d'accès à un service basé sur la norme USSD d'un réseau (11) de télécommunications mobiles depuis un terminal mobile (10), ledit procédé comprenant les phases suivantes, mises en oeuvre par le terminal mobile :
- une première phase exécutée localement par le terminal, comprenant les étapes suivantes :
- affichage (E0) d'au moins une option de service sur une interface dudit terminal, ladite option de service étant associée à un code USSD qui comprend une indication du service et de l'option de service,
- sélection (E1) par un utilisateur de ladite option de service,
- saisie (E2) par l'utilisateur d'au moins une information complémentaire demandée pour configurer l'option de service,
- construction (E3) d'un code USSD enrichi à partir du code USSD de l'option de service sélectionnée et de l'information complémentaire saisie, par concaténation,
- une deuxième phase de communication du terminal à travers le réseau, lors de laquelle le terminal envoie (E4) le code USSD enrichi construit à travers un canal dédié du réseau.

2. Procédé selon la revendication 1, dans lequel l'étape d'affichage d'au moins une option de service comprend un affichage d'au moins un pictogramme représentant ladite option de service et la sélection par un utilisateur de ladite option de service consiste à sélectionner ledit pictogramme.

3. Procédé selon la revendication 1 ou la revendication 2 dans lequel un message vocal est restitué de façon concomitante à l'affichage d'au moins un élément sur l'interface du terminal.

4. Procédé selon l'une des revendications précédentes, dans lequel l'information saisie par l'utilisateur est chiffrée préalablement à l'envoi sur le canal dédié du réseau du code enrichi.

5. Procédé selon l'une des revendications 1 à 3, dans lequel une information saisie par l'utilisateur est signée préalablement à l'envoi sur le canal dédié du réseau du code enrichi.

6. Terminal mobile comprenant :
- des moyens (10-4) d'affichage, adaptés pour afficher au moins une option de service, ladite option de service étant associée à un code USSD qui comprend une indication du service et de l'option de service,
- des moyens (10-5) de sélection et de saisie, adaptés pour sélectionner ladite option de service, et pour saisir au moins une information complémentaire demandée pour configurer ladite option de service,
- des moyens (10-6) de construction, agencés pour construire un code USSD enrichi à partir du code USSD de l'option de service sélectionnée et de l'information complémentaires saisie, par concaténation,
- des moyens (10-7) d'envoi, agencés pour envoyer le code USSD enrichi construit à travers un canal dédié du réseau.

7. Programme sur un support de données et chargeable dans la mémoire interne d'un terminal mobile, le programme comprenant des portions de code pour l'exécution des étapes du procédé selon l'une quelconque des revendications 1 à 5, lorsque le programme est exécuté sur ledit terminal.

8. Support de données partiellement ou totalement amovible, comportant des instructions de code de programme pour l'exécution des étapes d'un procédé selon l'une quelconque des revendications 1 à 5.

## Patentansprüche

1. Verfahren zum Zugreifen auf einen Dienst, der auf der USSD-Norm eines Mobiltelekommunikationsnetzes (11) beruht, von einem mobilen Endgerät (10), wobei das Verfahren die folgenden Phasen, die durch das mobile Endgerät ausgeführt werden, umfasst:
- eine erste Phase, die lokal durch das Endgerät ausgeführt wird und die folgenden Schritte enthält:
- Anzeigen (E0) wenigstens einer Dienstoption auf einer Schnittstelle des Endgeräts, wobei die Dienstoption einem USSD-Code zugeordnet ist, der eine Angabe des Diensts und der Dienstoption enthält,
- Auswählen (E1) durch einen Anwender der Dienstoption,
- Eingeben (E2) durch den Anwender wenigstens einer zusätzlichen Information, die erforderlich ist, um die Dienstoption zu konfigurieren,
- Konstruieren (E3) eines erweiterten USSD-Codes anhand des USSD-Codes der ausgewählten Dienstoption und der eingegebenen zusätzlichen Informationen durch Verkettung,
- eine zweite Phase der Kommunikation des Endgeräts über das Netz, in der das Endgerät den konstruierten erweiterten USSD-Code über einen dedizierten Kanal des Netzes schickt (E4).

2. Verfahren nach Anspruch 1, wobei der Schritt des Anzeigens wenigstens einer Dienstoption ein Anzeigen wenigstens eines Piktogramms, das die Dienstoption repräsentiert, umfasst und wobei das Auswählen durch einen Anwender der Dienstoption darin besteht, das Piktogramm auszuwählen.

3. Verfahren nach Anspruch 1 oder Anspruch 2, wobei begleitend zu der Anzeige wenigstens eines Elements auf der Schnittstelle des Endgeräts eine Sprachnachricht wiedergegeben wird.

4. Verfahren nach einem der vorhergehenden Ansprüche, wobei die von dem Anwender eingegebene Information vor dem Schicken über den dedizierten Kanal des Netzes des erweiterten Codes verschlüsselt wird.

5. Verfahren nach einem der Ansprüche 1 bis 3, wobei eine Information, die von dem Anwender eingegeben wird, vor dem Schicken über den dedizierten Kanal des Netzes des erweiterten Codes signiert wird.

6. Mobiles Endgerät, das Folgendes umfasst:
- Anzeigemittel (10-4), die dafür ausgelegt sind, wenigstens eine Dienstoption anzuzeigen, wobei die Dienstoption einem USSD-Code zugeordnet ist, der eine Angabe des Dienstes und der Dienstoption enthält,
- Auswahl- und Eingabemittel (10-5), die dafür ausgelegt sind, die Dienstoption auszuwählen und wenigstens eine zusätzliche Information, die erforderlich ist, um die Dienstoption zu konfigurieren, einzugeben,
- Konstruktionsmittel (10-6), die dafür ausgelegt sind, einen erweiterten USSD-Code anhand des USSD-Codes der ausgewählten Dienstoption und der eingegebenen komplementären Information ist durch Verkettung zu konstruieren,
- Sendemittel (10-7), die dafür ausgelegt sind, den konstruierten erweiterten USSD-Code über einen dedizierten Kanal des Netzes zu schicken.

7. Programm auf einem Datenträger, das in einen internen Speicher eines mobilen Endgeräts geladen werden kann, wobei das Programm Codeabschnitte enthält, um Schritte des Verfahrens nach einem der Ansprüche 1 bis 5 auszuführen, wenn das Programm in dem Endgerät ausgeführt wird.

8. Teilweise oder vollständig entnehmbarer Datenträger, der Programmcodebefehle für die Ausführung der Schritte eines Verfahrens nach einem der Ansprüche 1 bis 5 enthält.

## Claims

1. Method for accessing a service based on the USSD standard of a mobile telecommunication network (11) from a mobile terminal (10), said method comprising the following phases, implemented by the mobile terminal:
- a first phase executed locally by the terminal, comprising the following steps:
- displaying (E0) at least one service option on an interface of said terminal, said service option being associated with a USSD code that comprises an indication of the service and of the service option,
- user selection (E1) of said service option,
- user input (E2) of at least one additional piece of information required to configure the service option,
- construction (E3) of an enriched USSD code from the USSD code of the selected service option and the additional piece of information input, by concatenation,
- a second phase in which the terminal communicates via the network, in which the terminal transmits (E4) the constructed enriched USSD code via a dedicated channel of the network.

2. Method according to Claim 1, in which the step of displaying at least one service option comprises displaying at least one pictogram representing said service option and the user selection of said service option consists in selection of said pictogram.

3. Method according to Claim 1 or in Claim 2, in which a spoken message is delivered concomitantly with the display of the at least one element on the interface of the terminal.

4. Method according to one of the preceding claims, in which the piece of information input by the user is encrypted before the enriched code is transmitted over the dedicated channel of the network.

5. Method according to one of Claims 1 to 3, in which a piece of information input by the user is signed before the enriched code is transmitted over the dedicated channel of the network.

6. Mobile terminal, comprising:
- display means (10-4) capable of displaying at least one service option, said service option being associated with a USSD code that comprises an indication of the service and of the service option,
- input and selection means (10-5) capable of selecting said service option and of inputting at least one additional piece of information required to configure said service option,
- construction means (10-6) arranged to construct an enriched USSD code from the USSD code of the selected service option and the additional piece of information input, by concatenation,
- transmitting means (10-7) arranged to transmit the constructed enriched USSD code via a dedicated channel of the network.

7. Program on a data medium and loadable into the internal memory of a mobile terminal, the program comprising segments of code for executing steps of the method according to any one of Claims 1 to 5, when the program is executed by said terminal.

8. Partially or completely removable data medium comprising program code instructions for executing steps of a method according to any one of Claims 1 to 5 .
